# EUROPEAN PATENT APPLICATION

(11) **EP 4 715 082 A1**
(43) Date of publication of application: **25.03.2026**
(21) Application number: 24806650.8
(22) Date of filing: 17.05.2024
(51) Int. Cl.: C23C 2/06, C23C 2/40, C22C 38/02, C22C 38/06, C22C 38/14, C22C 38/12, C22C 38/08, C22C 38/34, C22C 38/38, C22C 38/28, C22C 38/32, C22C 38/26, C22C 38/24, C22C 38/22, C22C 38/58, C22C 38/50

(54) **STEEL PLATE HAVING ZINC-BASED COATING LAYER AND EXCELLENT CORROSION RESISTANCE, HOT-STAMPED COMPONENT, AND PRODUCTION METHOD THEREFOR**

(30) Priority: 17.05.2023 CN 202310558700
(71) Applicant: BAOSHAN IRON & STEEL CO., LTD., Shanghai 201900 (CN)
(72) Inventor: TAN, Ning, Shanghai 201900 (CN); LIU, Hao, Shanghai 201900 (CN); JIN, Xinyan, Shanghai 201900 (CN); WANG, Li, Shanghai 201900 (CN)
(74) Representative: Kuhnen & Wacker Patent- und Rechtsanwaltsbüro PartG mbB
(86) International application number: PCT/CN2024/093833
(87) International publication number: WO 2024/235300

(57) **Abstract**

Disclosed is a steel plate having a zinc-based coating layer, wherein the zinc-based coating layer has a zinc mass percentage content of ≥50%, an Al + Mg mass percentage content of <50%, and a thickness of 3-15 microns. Correspondingly, further disclosed is a hot-stamped component prepared from the steel plate having the zinc-based coating layer, a coating layer of the hot-stamped component comprising a surface layer and a ZnFe alloy layer; wherein the surface layer has a mass percentage content of zinc oxide of 5-50%, and a content of manganese oxide of less than 5%; and wherein the ZnFe alloy layer comprises a first ZnFe alloy phase having a mass percentage content of Fe not exceeding 25%, and a second ZnFe alloy phase having a mass percentage content of Fe of 50-70%, with the mass percentage content of Fe in the coating layer of the hot-stamped component gradually increasing from the surface to a steel substrate. Further disclosed are a method for manufacturing the steel plate having the zinc-based coating layer and a method for manufacturing the hot-stamped component. A hot-stamped component prepared using the method has excellent corrosion resistance.

## Description

### Technical Field

The present disclosure relates to a steel plate, a hot-stamped component and methods for manufacturing the same, in particular to a coated steel plate, a hot-stamped component and methods for manufacturing the same.

### Background Art

Hot-stamped components have wide applicability due to their excellent mechanical properties and good formability.

For production of a hot-stamped component, it's necessary to heat a steel plate to above the austenitizing temperature. Traditional steel plates cannot meet the requirement for use due to problems such as surface oxidation, decarburization, shot peening, and poor dimensional accuracy.

Therefore, one of the solutions currently available is to use an aluminum-silicon coated steel plate. Due to its excellent high temperature resistance and oxidation resistance, the aluminum-silicon coating is suitable for hot-stamped steel. However, on the other hand, the lap region between an aluminum-silicon coated hot-stamped component and its adjacent material is often difficult to be completely covered during the electrophoretic coating of a whole vehicle. Whole vehicle durability tests have found that aluminum-silicon hot-stamped components often corrode first at the edges and cuts.

Another solution is to use a galvanized steel plate to manufacture a hot-stamped component. This is because metallic zinc provides good protection against cut-edge corrosion due to its chemical properties. However, due to the low melting point of zinc, zinc volatilization or melting and LME cracking to the substrate are inclined to occur during the hot stamping process, which greatly restricts the use of zinc-based hot-stamped steel.

To solve this problem, Chinese Patent Literature CN107922988A, published on April 17, 2018, and titled "METHOD FOR NON-CONTACT COOLING OF STEEL PLATES AND APPARATUS THEREFOR", discloses a hot stamping method with a pre-cooling process and an apparatus therefor. Active cooling is performed after heating for hot stamping and before forming, so as to change the delay mode, thereby causing the steel plate to undergo forming, transformation and hardening at 450-700°C.

In addition, Chinese Patent Literature CN109070396A, published on December 21, 2018, and titled "METHOD AND APPARATUS FOR PRODUCING HARDENED STEEL COMPONENTS", discloses that a fluid is introduced during the stamping process to quickly convert zinc into a stable compound, thereby preventing secondary microcracks.

As it can be seen, both the above methods adopt indirect hot stamping processes rather than direct hot stamping processes, which will affect the production efficiency to a certain extent and entail special production equipment.

In view of the above, it is desired to provide a solution that can efficiently produce a hot-stamped component with excellent corrosion resistance using a direct hot stamping process.

### Summary

One of the objects of the present disclosure is to provide a steel plate with a zinc-based coating that can be effectively used to prepare a zinc-based hot-stamped component. The hot-stamped component has excellent corrosion resistance, and the production efficiency of the hot-stamped component can be increased.

In order to achieve the above object, the present disclosure proposes a steel plate with a zinc-based coating, comprising a steel substrate and a zinc-based coating plated on a surface of the steel substrate, wherein the zinc-based coating comprises ≥50% by mass of Zn and <50% by mass of Al+Mg, and has a thickness of 3-15 microns.

In the present disclosure, the zinc-based coating has a composition that may further comprise one or more of Al, Mg, Si, and the like, in addition to Zn. Therefore, the composition of the zinc-based coating of the present disclosure may be a binary or multi-component alloy containing Zn, including but not limited to Zn-Al, Zn-Al-Mg, Zn-Al-Mg-Si, etc.

Further, in the steel plate with a zinc-based coating according to the present disclosure, the zinc-based coating further comprises Si. Preferably, Si is present in an amount of ≤10% by mass, preferably ≤5% by mass.

In some embodiments, Zn is present in an amount of 50-99.9% by mass in the zinc-based coating.

In some embodiments, Al+Mg is present in an amount of ≤45% by mass. In some embodiments, Al+Mg is present in an amount of 0.1-45% by mass. In some embodiments, Al+Mg is present in an amount of 1-45% by mass.

Further, in the steel plate with a zinc-based coating according to the present disclosure, the zinc-based coating has a thickness of 3-10 microns or 5-10 microns.

Further, in the steel plate with a zinc-based coating according to the present disclosure, the steel substrate may be any steel material known in the art for preparing a zinc-based hot-stamped component. An exemplary steel substrate comprises the following chemical elements in mass percentage: C: 0.05-0.5%, Si: 0.01-2.0%, Mn: 0.3-3.0%, Al: 0.005-0.3%, Ti≤0.1%, B≤0.1%, Cr≤0.5%, Nb≤0.1%, V≤0.1%, Ni≤0.5%, Mo≤0.5%, and a balance of Fe and unavoidable impurities.

Still further, in the steel plate with a zinc-based coating according to the present disclosure, among the unavoidable impurities, P≤0.3%, S≤0.1%.

It should be noted that, in some other embodiments, steel substrates with other compositions are also feasible.

In some embodiments, the steel substrate has a thickness of 1.0-2.5 millimeters.

Another object of the present disclosure is to provide a hot-stamped component having excellent corrosion resistance and good strength, and being able to be produced with high efficiency.

In view of the above object of the present disclosure, the present disclosure further provides a hot-stamped component comprising a steel substrate and a coating plated on a surface of the steel substrate, the coating comprising a surface layer and a ZnFe alloy layer, wherein the surface layer comprises 5-50% by mass of zinc oxide, and less than 5% by mass of manganese oxide; wherein the ZnFe alloy layer comprises a first ZnFe alloy phase comprising no more than 25% by mass of Fe, and a second ZnFe alloy phase comprising 50-70% by mass of Fe, and wherein the mass percentage of Fe in the coating of the hot-stamped component increases gradually from the surface to the steel substrate. Preferably, the steel substrate is one as described in any embodiment herein. Preferably, the coating is a zinc-based coating as described in any embodiment herein.

In some embodiments, the surface layer comprises 1-50% by mass of aluminum oxide, and 0.5-10% by mass of magnesium oxide.

In some embodiments, the first ZnFe alloy phase has an area that occupies 5-50% of an area of the coating, and the second ZnFe alloy phase has an area that occupies 40-90% of the area of the coating.

One of the core improvements made by the present disclosure is 5-50% of zinc oxide and less than 5% of manganese oxide in the surface layer of the coating of the hot-stamped component, such that the component has excellent weldability, paintability and corrosion resistance. In addition, as the alloy layer comprises a first ZnFe alloy phase comprising no more than 25% of Fe, the component has excellent corrosion resistance, and the second ZnFe alloy phase comprising 50-70% of Fe can inhibit generation and propagation of coating cracks.

Further, the hot-stamped component according to the present disclosure has a microstructure comprising at least one of martensite, bainite and ferrite. In some embodiments, the microstructure of the hot-stamped component comprises martensite or bainite, and optionally pearlite or ferrite.

In some embodiments, the hot-stamped component according to the present disclosure comprises 0-4.8% of manganese oxide.

In some embodiments, the first ZnFe alloy phase of the hot-stamped component according to the present disclosure comprises 10-25% by mass of Fe, for example, 15-25%.

Preferably, the hot-stamped component is produced by directly hot stamping the steel plate with a zinc-based coating described in any embodiment of the present disclosure. Preferably, the hot-stamped component is prepared by the method for manufacturing a hot-stamped component described in any embodiment of the present disclosure.

The specific microstructure is related to the composition of the steel substrate and the cooling rate in the hot stamping step.

Still another object of the present disclosure is to provide a method for manufacturing a steel plate with a zinc-based coating, comprising the following steps: steelmaking, hot rolling, cold rolling, annealing and hot-dip galvanizing, and temper rolling, wherein in the hot rolling step, a coiling temperature is controlled to be 500-700°C; wherein in the annealing and hot-dip galvanizing step, an annealing temperature is controlled to be 700-810°C; wherein a plating solution temperature is 400-600°C, and wherein a cooling rate of the steel plate after leaving a zinc pot is 5-30°C/s.

In some embodiments, the plating solution comprises, based on a total weight of the plating solution, 0.0001-50% Al, 0.0001-10% Mg, and 0-5% Si, with a balance of Zn and unavoidable impurities, wherein a mass ratio of Al to Mg, Al/Mg, is in the range of 1-10000.

It should be noted that the coiling temperature in the hot rolling step may be adjusted within the range of 500-700°C according to the plate thickness. If the plate thickness is large, the coiling temperature may be lowered appropriately within this range. If the plate thickness is small, the coiling temperature may be increased appropriately within this range. The first purpose is to improve the coil shape of the hot rolled coil. The second purpose is to improve the internal and external oxidation characteristics of the hot rolled plate surface, and thereby influence the change in the Fe content in the ZnFe alloy phase in the alloy layer of the component after hot stamping. The third purpose is to control the dimensional accuracy of the steel plate and prevent thickness fluctuation.

After the hot-rolled plate is pickled to remove the surface oxide scale, it is cold-rolled to obtain the desired thickness specification. The cold-rolling deformation is controlled at 10-70%. If the deformation is less than 10%, the structure of the cold-rolled steel plate will be not uniform, affecting the toughness and stability of the hot-stamped component. If the deformation is higher than 70%, cold rolling will become more difficult.

Further, in the method for manufacturing a steel plate with a zinc-based coating according to the present disclosure, in the cold rolling step, the cold rolling deformation is controlled to be 10-70%.

Yet another object of the present disclosure is to provide a method for manufacturing a hot-stamped component, comprising the following steps:
producing the steel plate with a zinc-based coating;
subjecting the steel plate with a zinc-based coating to a first-stage heating, wherein a first-stage heating temperature is 350-750°C, and a first-stage heating time is 10-600 s;
subjecting the steel plate with a zinc-based coating to a second-stage heating, wherein a second-stage heating temperature is 760-950°C, and a second-stage heating time is adjusted according to a thickness of the steel plate with a zinc-based coating;
transferring the steel plate with a zinc-based coating to a die, and at the same time, performing cooling and stamping.

Another core improvement made by the present disclosure is that the above steps provide the hot-stamped component with a special coating structure, that is, the surface layer comprises 5-50% by mass of zinc oxide, less than 5% by mass of manganese oxide, 1-50% by mass of aluminum oxide, and 0.5-10% by mass of magnesium oxide, wherein the ZnFe alloy layer comprises a first ZnFe alloy phase comprising no more than 25% by mass of Fe, and a second ZnFe alloy phase comprising 50-70% by mass of Fe; wherein the area of the first ZnFe alloy phase occupies 5-50% of the coating area, and the area of the second ZnFe alloy phase occupies 40-90% of the coating area; and wherein the mass percentage of Fe in the coating of the hot-stamped component increases gradually from the surface to the steel substrate, thereby achieving excellent corrosion resistance, especially corrosion protection at cut edges.

In addition, the above hot stamping process can ensure the optimal ZnFe alloying variation in the coating, i.e., ensuring that the ZnFe alloy phase comprising 7-25% of Fe in the alloy layer is preferentially formed on the surface, and the ZnFe alloy phase comprising 50-70% of Fe is present close to the steel substrate. This two-layer configuration can also effectively prevent propagation of surface cracks of the component.

In addition, the heating process used in the heating scheme according to the present disclosure also enables control of the generation rates and surface contents of zinc oxide and manganese oxide on the surface, thereby ensuring the corrosion resistance, and welding and painting performances of the component.

Further, the heating temperature in the first stage may be a constant temperature or a plurality of (such as 1, 2, 3, 4 or 5) different temperatures in the range of 350-750°C. The heating temperature may be increased gradually, or it may be increased or decreased in steps with a set temperature span. The heating temperature may also be increased first, then decreased, and then increased again. For example, the temperature span may be set to 20-150°C per span, and there may be 1, 2, 3, or 4 temperature spans.

Further, the heating temperature in the second stage may also be a constant temperature or a plurality of (such as 1, 2, 3, 4 or 5) different temperatures in the range of 760-950°C. The heating temperature may be increased gradually, or it may be increased or decreased in steps with a set temperature span. The heating temperature may also be increased first, then decreased, and then increased again. For example, the temperature span may be set to 30-150°C per span, and there may be 1, 2, 3, or 4 temperature spans.

Further, in the method for manufacturing a hot-stamped component according to the present disclosure, the second-stage heating time is controlled to be t=a+150(d-0.8), wherein d represents the thickness of the steel plate with a zinc-based coating, in mm; a represents a time correction value in the range of 50-120; and the unit of t is s.

Further, in the method for manufacturing a hot-stamped component according to the present disclosure, the first-stage heating temperature is 450-650°C.

Further, in the method for manufacturing a hot-stamped component according to the present disclosure, in the cooling and stamping step, during a period of time from when the die and the steel plate with a zinc-based coating are just fitted until when the stamping ends, a die closing speed is controlled to be 20-300 mm/s, and a cooling rate is controlled to be 15-100°C/s.

Further, in the method for manufacturing a hot-stamped component according to the present disclosure, the steel plate with a zinc-based coating is produced by the following steps: steelmaking, hot rolling, cold rolling, annealing and hot-dip galvanizing, and temper rolling, wherein in the hot rolling step, a coiling temperature is controlled to be 500-700°C; wherein in the annealing and hot-dip galvanizing step, an annealing temperature is controlled to be 700-810°C; wherein a plating solution temperature is 400-600°C, and wherein a cooling rate of the steel plate after leaving a zinc pot is 5-30°C/s.

Further, in the method for manufacturing a hot-stamped component according to the present disclosure, in the cold rolling step, the cold rolling deformation is controlled to be 10-70%.

The steel plate with a zinc-based coating, the hot-stamped component and the methods for manufacturing the same according to the present disclosure have the following advantages and beneficial effects:
(1) In contrast to the traditional steel plate with a zinc-based coating, the steel plate with a zinc-based coating according to the present disclosure can be shaped by hot stamping directly. For complex shaped components, there is no need to cold stamp the coated steel plate to a certain degree before hot stamping, thereby greatly increasing the production efficiency and reducing the production cost.
(2) In contrast to the traditional hot stamping method, the stamping method according to the present disclosure can realize continuous heating, cooling and forming, and does not require pre-cooling of the blank before forming, thereby ensuring good formability of the blank.
(3) The coating of the hot-stamped component according to the present disclosure comprises a surface layer and a ZnFe alloy layer, wherein the surface layer comprises 5-50% of zinc oxide, and less than 5% of manganese oxide, thereby enabling the hot-stamped component to have excellent weldability, paintability, and corrosion resistance.
(4) The ZnFe alloy layer in the coating of the hot-stamped component according to the present disclosure comprises a first ZnFe alloy phase comprising no more than 25% of Fe and a second ZnFe alloy phase comprising 50-70% of Fe. This allows the hot-stamped component to have excellent corrosion resistance, and also inhibits generation and propagation of cracks in the coating.
(5) The hot-stamped component according to the present disclosure has good corrosion resistance, especially corrosion protection at cut edges.

### Description of the Drawings

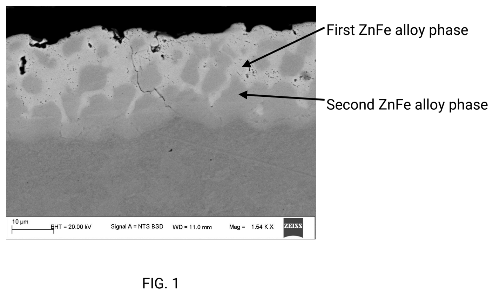

FIG. 1 shows a cross-sectional coating structure of the hot-stamped component in Example 6 according to the present disclosure.

### Detailed Description

The steel plate with a zinc-based coating, the hot-stamped component and the methods for manufacturing the same according to the present disclosure will be further explained and illustrated below with reference to the accompanying drawing and the specific Examples. However, such explanation and illustration do not constitute any undue limitation to the technical solution of the present disclosure.

The following steps were used to produce the hot-stamped components in the Examples according to the present disclosure:
(1) Steelmaking, hot rolling, cold rolling, annealing and hot-dip galvanizing, and temper rolling were performed to produce a steel plate with a zinc-based coating. The steel plate with a zinc-based coating comprised a steel substrate and a zinc-based coating plated on the surface of the steel substrate, wherein the zinc-based coating comprised ≥50% by mass of Zn and <50% by mass of Al+Mg, and had a thickness of 3-15 microns. Table 1 lists the composition of the zinc-based coating and the thickness of the zinc-based coating in each of the Examples. Table 2 lists the mass percentages of various chemical elements in the steel substrate of the steel plate with a zinc-based coating in each of the Examples.

In the hot rolling step, the coiling temperature was controlled to be 500-700°C. In the annealing and hot-dip galvanizing step, the annealing temperature was controlled to be 700-810°C. The temperature of the plating solution was controlled to be 400-600°C, and the composition of the plating solution was Al: 0.0001-50%, Mg: 0.0001-10%, and Si: 0-5%, wherein the Al/Mg ratio was 1-10000, and the balance was Zn and unavoidable impurities (see Table 2). The cooling rate of the steel plate after leaving the zinc pot was 5-30°C/s.

In some embodiments, in the cold rolling step, the cold rolling deformation was controlled to be 10-70%.

(2) The steel plate with a zinc-based coating was subjected to two-stage heating. The first-stage heating temperature was 350-750°C. The first-stage heating temperature might be a constant temperature or a plurality of different temperatures within the range of 350-750°C. The heating temperature might be increased gradually, or might be increased or decreased with a set temperature span. The heating temperature might also be increased first, then decreased, and then increased again. The first-stage heating time was 10-600s. The second-stage heating temperature was 760-950°C. The second-stage heating time t was related to the thickness of the plate. In some embodiments, t = a + 150 (d - 0.8), wherein d represented the thickness of the steel plate with a zinc-based coating, in mm; a represented a time correction value in the range of 50-120; and the unit of t was s.

(3) The steel plate with a zinc-based coating was transferred to a die, and at the same time, cooling and stamping were performed. During the period of time from when the mold and the steel plate with a zinc-based coating were just fitted until when the stamping ended, the die closing speed was controlled to be 20-300 mm/s, and the cooling rate was controlled to be 15-100°C/s.

Table 1 lists the structural parameters of the steel plate with a zinc-based coating in each of Examples 1-6.

**Table 1**

| No. | Composition of zinc-based coating | Zn in zinc-based coating (wt%) | Mass percentage of Al+Mg (wt%) | Thickness of zinc-based coating (µm) | Thickness of steel plate with zinc-based coating (mm) |
|---|---|---|---|---|---|
| Ex. 1 | Zn+Al+Mg | 99.9 | 0.1 | 3 | 2 |
| Ex. 2 | Zn+Al+Mg+Si | 50 | 45 | 5 | 1.5 |
| Ex. 3 | Zn+Al+Mg | 99 | 1 | 10 | 1.0 |
| Ex. 4 | Zn+Al+Mg | 90 | 10 | 8 | 1.8 |
| Ex. 5 | Zn+Al+Mg | 95 | 5 | 6 | 2.5 |
| Ex. 6 | Zn+Al+Mg | 98 | 2 | 9 | 1.2 |

**Table 2**

| No. | Composition of plating solution | | | |
|---|---|---|---|---|
| | Al in plating solution (wt%) | Mg in plating solution (wt%) | Al/Mg in plating solution | Si in plating solution (wt%) |
| Ex. 1 | 0.0999 | 0.0001 | 999 | 0 |
| Ex. 2 | 40 | 10 | 4 | 5 |
| Ex. 3 | 0.0001 | 0.0001 | 1 | 0 |
| Ex. 4 | 9.9 | 0.1 | 99 | 1 |
| Ex. 5 | 50 | 0.005 | 10000 | 2 |
| Ex. 6 | 0.2 | 0.1 | 2 | 0.1 |

Table 3 lists the mass percentages of various chemical elements in the steel substrate of the steel plate with a zinc-based coating in each of Examples 1-6.

**Table 3. (wt%, the balance being Fe and other unavoidable impurities except P and S)**

| No. | Chemical elements | | | | | | | | | | | | |
|---|---|---|---|---|---|---|---|---|---|---|---|---|---|
| | C | Si | Mn | Al | Ti | B | Cr | Nb | Mo | Ni | V | P | S |
| Ex. 1 | 0.05 | 0.1 | 0.3 | 0.005 | 0 | 0 | 0 | 0 | 0 | 0 | 0 | 0.001 | 0.001 |
| Ex. 2 | 0.1 | 0.01 | 0.5 | 0.01 | 0.02 | 0.001 | 0.1 | 0.001 | 0.001 | 0.001 | 0 | 0.003 | 0.001 |
| Ex. 3 | 0.2 | 0.2 | 1.4 | 0.02 | 0.01 | 0.02 | 0.15 | 0.005 | 0.005 | 0.002 | 0 | 0.01 | 0.002 |
| Ex. 4 | 0.23 | 0.8 | 2 | 0.05 | 0.03 | 0.003 | 0.2 | 0.04 | 0.04 | 0.05 | 0.001 | 0.02 | 0.004 |
| Ex. 5 | 0.3 | 2.0 | 3 | 0.1 | 0.1 | 0.1 | 0.3 | 0.05 | 0.5 | 0.2 | 0.05 | 0.1 | 0.06 |
| Ex. 6 | 0.5 | 1.0 | 2.2 | 0.3 | 0.02 | 0.05 | 0.5 | 0.1 | 0.2 | 0.5 | 0.1 | 0.3 | 0.1 |

Table 4 lists the process parameters for manufacturing the steel plate with a zinc-based coating in each of Examples 1-6.

**Table 4**

| No. | Coiling temperature (°C) | Cold rolling deformation (%) | Annealing temperature (°C) | Temperatur e of plating solution (°C) | Cooling rate after leaving zinc pot (°C/s) |
|---|---|---|---|---|---|
| Ex. 1 | 500 | 20 | 700 | 460 | 15 |
| Ex. 2 | 600 | 30 | 750 | 600 | 10 |
| Ex. 3 | 700 | 70 | 810 | 430 | 30 |
| Ex. 4 | 650 | 50 | 760 | 550 | 20 |
| Ex. 5 | 630 | 10 | 780 | 500 | 5 |
| Ex. 6 | 670 | 60 | 770 | 400 | 14 |

Table 5 lists the process parameters for manufacturing the hot-stamped component in each of Examples 1-6.

**Table 5**

| No. | First-stage heating temperature (°C) | First-stage heating time (s) | Second-stag e heating temperature (°C) | Second-stage heating time (s) | Die closing speed(mm/s) | Cooling rate (°C/s) |
|---|---|---|---|---|---|---|
| Ex. 1 | 350-400-450-550 | 100 | 760-900-940 | 260 | 20 | 15 |
| Ex. 2 | 480-500-600-750 | 50 | 910 | 185 | 50 | 20 |
| Ex. 3 | 400 | 600 | 840 | 110 | 100 | 30 |
| Ex. 4 | 480-550-500 | 30 | 900 | 230 | 200 | 50 |
| Ex. 5 | 510-550-650 | 10 | 920 | 335 | 300 | 100 |
| Ex. 6 | 500-550 | 40 | 900 | 140 | 150 | 70 |

Note: Table 1 includes some cells in each of which there are two or more temperature values, indicating that the heating temperature varied according to the shown arrangement.

Accordingly, the finished hot-stamped components prepared in Examples 1-6 were sampled respectively, and their microstructures were examined. The relevant examination results are listed in Table 6 below. The contents of zinc oxide and manganese oxide in the surface layer were obtained by XRD or EDS analysis, and the Fe contents in the first ZnFe alloy phase and the second ZnFe alloy phase in the ZnFe alloy layer were obtained by EDS analysis.

**Table 6**

| No. | Microstruct ure | Zinc oxide content in surface layer (%) | Manganes eoxide content in surface layer (%) | Mass percentage of Fe in first ZnFe alloy phase (%) | Mass percentage of Fe in second ZnFe alloy phase (%) | Whether Fe content in coating increases from surface to steel substrate | Area fraction of first ZnFe alloy phase % | Area fraction of second ZnFe alloy phase % |
|---|---|---|---|---|---|---|---|---|
| Ex. 1 | Bainite + pearlite | 5 | 0 | 25 | 50 | Yes | 50 | 40 |
| Ex. 2 | Ferrite + martensite | 10 | 1 | 21 | 60 | Yes | 30 | 66 |
| Ex. 3 | Martensite | 50 | 4.8 | 18 | 67 | Yes | 5 | 90 |
| Ex. 4 | Martensite | 40 | 3 | 16 | 70 | Yes | 20 | 78 |
| Ex. 5 | Martensite | 20 | 2 | 15 | 55 | Yes | 10 | 85 |
| Ex. 6 | Martensite | 30 | 2 | 19 | 65 | Yes | 25 | 70 |

As it can be seen from Table 6 above, the microstructure of the hot-stamped component according to the present disclosure might be one or more of martensite, bainite, ferrite, and pearlite, and the specific constitution was related with the chemical composition of the steel substrate and the cooling rate shown in Table 5.

As it can further be seen from Table 6, the coating of the hot-stamped component in each Example comprised a surface layer and a ZnFe alloy layer, wherein the surface layer comprised 5-50% by mass of zinc oxide, and less than 5% by mass of manganese oxide; wherein the ZnFe alloy layer comprised a first ZnFe alloy phase comprising no more than 25% by mass of Fe, and a second ZnFe alloy phase comprising 50-70% by mass of Fe; wherein the second ZnFe alloy phase was closer to the steel substrate than the first ZnFe alloy phase; and wherein the mass percentage of Fe in the coating of the hot-stamped component increased gradually from the surface to the steel substrate. In addition, as measured using the same method, in the surface layer of the hot-stamped component in each Example, the mass percentage of aluminum oxide was in the range of 1-50%, and the mass percentage of magnesium oxide was in the range of 0.5-10%.

In addition, the inventors also sampled each Example to further test the corrosion resistance, adhesion and weldability of the hot-stamped component in each Example. The test results are listed in Table 7.

The corrosion resistance rating was evaluated after 30 cycles using the Volkswagen Standard PV1210 method. The corrosion resistance was rated based on the corrosion depth and width, with level 5 representing the best and level 1 representing the worst.

The painting adhesion rating was based on GB/T9286-1998. The coating peeling was visually inspected using the cross-cut test method. The adhesion level decreases from 0 to 5 in sequence, with level 5 being the worst.

Weldability evaluation was conducted according to GM OEM Standard GWS-5:2011, with the presence or absence of weld spatter as the evaluation criterion.

**Table 7**

| No. | Corrosion resistance rating | Painting adhesion rating | Weldability evaluation |
|---|---|---|---|
| Ex. 1 | 5 | 0 | Yes |
| Ex. 2 | 4 | 2 | No |
| Ex. 3 | 4 | 3 | Slight |
| Ex. 4 | 4 | 2 | No |
| Ex. 5 | 4 | 1 | No |
| Ex. 6 | 4 | 1 | No |

As it can be seen from Table 7, the hot-stamped components of various Examples according to the present disclosure all had excellent corrosion resistance, excellent paint adhesion and good weldability.

In addition, FIG. 1 further shows a photograph of the cross-sectional coating of the hot-stamped component in Example 6 according to the present disclosure.

As it can be seen from FIG. 1, the coating of the hot-stamped component comprised a first ZnFe alloy phase comprising no more than 25% of Fe and a second ZnFe alloy phase comprising 50-70% of Fe. The second ZnFe alloy phase was closer to the steel substrate and was complete and continuous. Moreover, the coating was also complete and continuous.

It should be noted that the combinations of the various technical features in this case are not limited to the combinations described in the claims of this case or the combinations described in the specific Examples. All technical features recorded in this case can be freely combined in any way unless there is a contradiction therebetween.

It should also be noted that the above-listed Examples are only specific embodiments of the present disclosure. Obviously, the present disclosure is not limited to the above Examples. Similar changes or modifications made therewith can be directly derived from the contents disclosed in the present disclosure or can be easily contemplated by those skilled in the art, and shall all fall within the protection scope of the present disclosure.

## Claims

1. A steel plate with a zinc-based coating having excellent corrosion resistance, comprising a steel substrate and a zinc-based coating plated on a surface of the steel substrate, wherein the zinc-based coating comprises ≥50% by mass of Zn and <50% by mass of Al+Mg, and has a thickness of 3-15 microns.

2. The steel plate with a zinc-based coating according to claim 1, wherein the zinc-based coating further comprises Si, and/or the zinc-based coating has a thickness of 5-10 microns.

3. The steel plate with a zinc-based coating according to claim 1, wherein the steel substrate comprises the following chemical elements in mass percentage: C: 0.05-0.5%, Si: 0.01-2.0%, Mn: 0.3-3.0%, Al: 0.005-0.3%, Ti≤0.1%, B≤0.1%, Cr≤0.5%, Nb≤0.1%, V≤0.1%, Ni≤0.5%, Mo≤0.5%, and a balance of Fe and unavoidable impurities.

4. The steel plate with a zinc-based coating according to claim 3, wherein among the unavoidable impurities in the steel substrate, P≤0.3%, S≤0.1%.

5. A hot-stamped component, comprising a steel substrate and a coating plated on a surface of the steel substrate, wherein the coating comprises a surface layer and a ZnFe alloy layer; wherein the surface layer comprises 5-50% by mass of zinc oxide, and less than 5% by mass of manganese oxide; wherein the ZnFe alloy layer comprises a first ZnFe alloy phase comprising no more than 25% by mass of Fe, and a second ZnFe alloy phase comprising 50-70% by mass of Fe; and wherein a mass percentage of Fe in the coating of the hot-stamped component increases gradually from the surface to the steel substrate.

6. The hot-stamped component according to claim 5, wherein the surface layer comprises 1-50% by mass of aluminum oxide, and 0.5-10% by mass of magnesium oxide; and/or the first ZnFe alloy phase has an area that occupies 5-50% of an area of the coating, and the second ZnFe alloy phase has an area that occupies 40-90% of the area of the coating.

7. The hot-stamped component according to claim 5, wherein the hot-stamped component is produced by directly hot stamping the steel plate with a zinc-based coating according to any one of claims 1-4.

8. The hot-stamped component according to any one of claims 5-7, wherein the hot-stamped component has a microstructure comprising at least one of martensite, bainite, ferrite and pearlite.

9. A method for manufacturing the steel plate with a zinc-based coating according to any one of claims 1-4, comprising the following steps: steelmaking, hot rolling, cold rolling, annealing and hot-dip galvanizing, and temper rolling, wherein in the step of hot rolling, a coiling temperature is controlled to be 500-700°C; wherein in the step of annealing and hot-dip galvanizing, an annealing temperature is controlled to be 700-810°C; wherein a plating solution temperature is 400-600°C; and wherein a cooling rate of the steel plate after leaving a zinc pot is 5-30°C/s.

10. The method for manufacturing the steel plate with a zinc-based coating according to claim 9,
wherein in the step of cold rolling, a cold rolling deformation is controlled to be 10-70%; and/or the plating solution comprises, based on a total weight of the plating solution, 0.0001-50% Al, 0.0001-10% Mg, and 0-5% Si, with a balance of Zn and unavoidable impurities, wherein a mass ratio of Al to Mg, Al/Mg, is in the range of 1-10000.

11. A method for manufacturing the hot-stamped component according to claim 9 or 10, comprising the following steps:
producing the steel plate with a zinc-based coating;
subjecting the steel plate with a zinc-based coating to a first-stage heating, wherein a first-stage heating temperature is 350-750°C, and a first-stage heating time is 10-600 s;
subjecting the steel plate with a zinc-based coating to a second-stage heating, wherein a second-stage heating temperature is 760-950°C, and a second-stage heating time is adjusted according to a thickness of the steel plate with a zinc-based coating;
transferring the steel plate with a zinc-based coating to a die, and at the same time, performing cooling and stamping.

12. The method for manufacturing the hot-stamped component according to claim 11, wherein the second-stage heating time is controlled to be t=a+150(d-0.8), wherein d represents the thickness of the steel plate with a zinc-based coating, in mm; a represents a time correction value in the range of 50-120; and the unit of t is s.

13. The method for manufacturing the hot-stamped component according to claim 11, wherein the first-stage heating temperature is 450-650°C.

14. The method for manufacturing the hot-stamped component according to claim 11, wherein in the step of cooling and stamping, during a period of time from when the die and the steel plate with a zinc-based coating are just fitted until when the stamping ends, a die closing speed is controlled to be 20-300 mm/s, and a cooling rate is controlled to be 15-100°C/s.

15. The method for manufacturing the hot-stamped component according to claim 11, wherein the steel plate with a zinc-based coating is manufactured by the method according to claim 9 or 10.
